# EUROPÄISCHE PATENTSCHRIFT

(11) **EP 0 589 266 B1**
(45) Veröffentlichungstag und Bekanntmachung des Hinweises auf die Patenterteilung: **26.04.2000**
(21) Anmeldenummer: 93114168.3
(22) Anmeldetag: 03.09.1993
(51) Int. Cl.: G06F 1/08

(54) **Mikroprozessor mit CPU und EEPROM**
Microprocessor with CPU and EEPROM
Microprocesseur à CPU et EEPROM

(30) Priorität: 22.09.1992 DE 4231703
(43) Veröffentlichungstag der Anmeldung: 30.03.1994
(73) Patentinhaber: SIEMENS AKTIENGESELLSCHAFT, 80333 München (DE)
(72) Erfinder: Pockrandt, Wolfgang, Dipl.-Phys., D-85293 Reichertshausen (DE); Schützeneder, Heinz, Dipl.-Ing., D-81673 München (DE); Papelitzky, Erwin, Dipl.-Ing., D-82349 Pentenried (DE)

(56) Entgegenhaltungen:
- EP-A- 0 476 759
- US-A- 5 115 503
- PATENT ABSTRACTS OF JAPAN vol. 14, no. 369 (P-1090)9. August 1990 & JP-A-02 137 009 (SEIKO EPSON CORP) 25. Mai 1990
- IBM TECHNICAL DISCLOSURE BULLETIN Bd. 32, Nr. 8A , Januar 1990 , NEW YORK US Seiten 265 - 266 'memory controller which automatically adjusts to changes in system clock rate'

## Beschreibung

Die Erfindung betrifft einen Mikroprozessor mit einer zentralen Steuereinheit, mit einem Speicher vom EEPROM-Typ und mit einer Schutzvorrichtung, die sicherstellt, daß während eines Lesevorganges im EEPROM-Speicher die Taktfrequenz der zentralen Steuereinheit einen Grenzwert nicht übersteigt, bei dem ein Lesen des Speichers sicher gewährleistet ist, wobei die Schutzvorrichtung mit einer Taktkonditionierungseinheit gebildet ist, die einen Takteingang zum externen Eingeben eines Mikroprozessortaktes aufweist, und die während eines Lesevorganges des Speichers den Mikroprozessortakt durch Frequenzteilung verringert, so daß während des Lesevorganges ein Taktsignal mit gegenüber sonstigen Vorgängen verlängertem Taktzyklus zum Steuern der zentralen Steuereinheit zur Verfügung steht, und mit einer Verknüpfungsvorrichtung, die zwei Taktsignaleingänge und einen Taktsignalausgang aufweist, gebildet ist, wobei ein Taktsignaleingang der Verknüpfungsvorrichtung mit dem Taktsignaleingang des Mikroprozessors zusammengeschaltet ist, der andere Taktsignaleingang der Verknüpfungsvorrichtung mit dem Taktsignalausgang der Taktkonditionierungseinheit verbunden ist und der Taktsignalausgang der Verknüpfungsvorrichtung das Taktsignal zum Ansteuern der zentralen Steuereinheit bereitstellt und wobei die Verknüpfungsvorrichtung von der zentralen Steuereinheit derart angesteuert ist, daß sie abwechselnd den an dem Taktsignaleingang anliegenden Mikroprozessortakt und den von der Taktkonditionierungseinheit bereitgestellten Takt zur zentralen Steuereinheit überträgt.

Ein solcher Mikroprozessor dient insbesondere der Verwendung in sicherheitsrelevanten System. Unter sicherheitsrelevanten Systemen sind hierbei insbesondere solche Systeme gemeint, bei denen verhindert werden muß, daß der Mikroprozessor bei einem Lesevorgang des EEPROM's einen Speicherzellenzustand erfaßt, der nicht dem tatsächlichen Speicherinhalt entspricht. Beispielsweise sind Mikroprozessoren zur Verwendung in Chipkarten betroffen, die in Kredit- oder Debitsystemen oder in Zugangskontroll- bzw. Zugriffsystemen eingesetzt werden.

Ein gattungsgemäßer Mikroprozessor ist in der DE 40 29 598 A1 beschrieben. Beim dortigen Mikroprozessor wird innerhalb einer bestimmten Zeitspanne das von außen angelegte Mikroprozessortaktsignal immer für einen bestimmten ersten Zeitabschnitt direkt und für einen ebenfalls bestimmten zweiten Zeitabschnitt mit einer durch einen bestimmten Wert geteilten Frequenz an die zentrale Steuereinheit angelegt. Die Summe des ersten und des zweiten Zeitabschnitts entspricht dabei der Dauer der bestimmten Zeitspanne. Auf diese Weise wird sichergestellt, daß die mittlere Taktfrequenz konstant bleibt, unabhängig von einem tatsächlich auftretenden Lesevorgang während der bestimmten Zeitspanne. Hierfür ist jedoch eine komplizierte Schaltungsanordnung nötig.

Auch die DE 38 34 227 A1 beschreibt einen Mikroprozessor mit einer zentralen Steuereinheit und einem Speicher, bei dem die Frequenz des dem Speicher zugeführten Taktsignals von einem Teiler auf eine gewünschte Frequenz umgewandelt wird. Allerdings wird dort die Frequenz der zentralen Steuereinheit zugeführten Taktsignals nicht geändert.

Der Lesevorgang von üblichen Halbleiterspeichern vom EEPROM-Typ erfordert eine bestimmte Mindestzeitdauer. So ist ein sicheres, eindeutiges Auslesen des Inhaltes von üblichen EEPROM's jeweils schnellstens in einer Zeitdauer durchführbar, die einer Taktfrequenz der lesenden Zentraleinheit bzw. CPU von ca. 10 MHz entspricht. Wird die CPU mit einer größeren Taktfrequenz betrieben, so liest sie aus dem EEPROM immer den gleichen Binärwert aus, also entweder nur Einsen oder nur Nullen.

Bei Verwendung von Speichern vom EEPROM-Typ in mit Hilfe von N-MOS-Technik realisierten Mikroprozessoren führt dies zu keinem Problem, weil die CPU in solchen Prozessoren mit einer maximalen Taktfrequenz von ca. 6 MHz betrieben werden kann. Moderne Mikroprozessoren, insbesondere bei Realisierung in CMOS-Technik, können jedoch mit einer Taktfrequenz der CPU von bis zu 30 MHz betrieben werden.

Wenn in einem solchen Prozessor ein Speicher vom EEPROM-Typ verwendet wird, so darf dieser Prozessor - ein sicheres Lesen des Speicherinhaltes vorausgesetzt - nicht mit einer derart hohen Taktfrequenz betrieben werden. Es ist jedoch nicht auszuschließen, daß jemand in nicht berechtigter Weise einen solchen Mikroprozessor, der z. B. in einer Chipkarte einbeaut ist, mit einer entsprechend hohen Taktfrequenz betreibt, um ein nicht eindeutiges Lesen des Speicherinhaltes des EEPROM durch die CPU zu erzielen.

Aufgabe der Erfindung ist das Bereitstellen eines gattungsgemäßen Mikroprozessors, der ein eindeutiges Lesen des EEPROM-Inhaltes auch gewährleistet, wenn er mit einer höheren Taktfrequenz betrieben wird.

Diese Aufgabe wird gelöst durch einen Mikroprozessor mit den Merkmalen des Patentanspruchs 1. Günstige Ausgestaltungesformen sind Gegenstand von Unteransprüchen.

Die in der Schutzvorrichtung eines erfindungsgemäßen Mikroprozessors enthaltene Taktkonditionierungseinheit verringert während eines Lesvorganges des EEPROM's den Mikroprozessortakt durch Frequenzteilung, so daß während des Lesevorganges ein gegenüber der üblichen Taktzykluszeit verlängerter Taktzyklus zum Steuern der CPU vorgesehen ist. Eine solche Taktkonditionierungseinheit kann einen Frequenzteiler enthalten, der mit einem extern eingegebenen Prozessortakt angesteuert wird. Darüber hinaus kann eine Verknüpfungsvorrichtung mit mindestens zwei Eingängen und einem Ausgang vorgesehen sein, wobei einer der Eingänge mit dem extern eingegebenen Prozessortakt beaufschlagt wird und der mindestens einen Eingang mit mindestens einem Ausgang des Frequenzteilers zusammenschaltbar ist. Als Verknüpfungsvorrichtung kann hierbei ein logisches Gatter verwendet werden bzw. eine Multiplexervorrichtung.

Außerdem kann ein erfindungsgemäßer Mikroprozessor einen internen Taktgenerator enthalten, dessen Taktfrequenz nicht größer ist als die Grenzfrequenz, mit der ein sicheres Lesen des E²PROM möglich ist und dessen Taktfrequenz auch nicht durch externe Manipulation größer werden kann als diese Grenzfrequenz. In diesem Fall kann die Taktkonditionierungseinheit aus einer Schaltvorrichtung bestehen, die üblicherweise einen extern eingespeisten Prozessortakt an die CPU schaltet und die während eines Lesevorganges im EEPROM den von der internen Einheit bereitgesteltlten Takt an die CPU weiterschaltet.

Als Frequenzteiler für eine erfindungsgemäße Taktkonditionierungseinheit kann ein Zähler verwendet werden, wobei insbesondere ein programmierbarer Zähler eingesetzt werden kann.

In einer Ausgestaltungsform eines erfindungsgemäßen Mikroprozessors enthält die Sicherheitsvorrichtung eine Einrichtung zum Erfassen der Taktfrequenz des extern eingegebenen Prozessortaktes und eine Steuereinheit, die eine Verringerung der zum Ansteuern der CPU vorgesehenen Taktfrequenz in Abhängigkeit von der erfaßten Prozessortaktfrequenz bewirkt.

In einer anderen Ausgestaltungsform enthält die Sicherheitsvorrichtung eines solchen Prozessors anstelle der Einrichtung zum Erfassen der Taktfrequenz des extern eingespeisten Prozessortaktes eine Einrichtung zum Erfassen der zum Ansteuern der CPU vorgesehenen Taktfrequenz.

In einer besonders günstigen Ausgestaltungsform enthält ein erfindungsgemäßer Mikroprozessor eine Schutzvorrichtung, die während eines Lesevorganges im E²PROM die Taktfrequenz des Prozessors um einen fest vorgegebenen Faktor verringert und nur bei Erreichen eines Grenzwertes der Taktfrequenz den Verringerungsfaktor für die Taktfrequenz vergrößert. Hierbei wird vorzugsweise die Größe des vergrößerten Verringerungsfaktors für die Taktfrequenz in Abhängigkeit von dem tatsächlichen Wert der der CPU bereitgestellten Taktfrequenz variiert.

Vorzugsweise wird bei einer zuvor erwähnten Verringerung der Taktfrequenz diese nur für den jeweiligen Lesezyklus im E²PROM, beispielsweise durch Einfügen von Wartezyklen, sogeannten Wait States, verringert.

Erfindungsgemäß verbleibt unabhängig von der Prozessortaktfrequenz immer eine ausreichende Zeit für den eigentlichen Auslesevorgang im E²PROM, indem der Prozessortakt während des Auslesens des EEPROM über eine Wait State Schaltung für eine bestimmte Anzahl von Takten angehalten wird. So bleibt der Befehlsablauf des Mikroprozessors unverändert erhalten, obwohl genügend Zeit zum sicheren Auslesen des EEPROM zur Verfügung steht. Die Anzahl der Wartetakte, der sogenannten Wait States, muß so bemessen sein, daß auch bei der höchsten Taktfrequenz, mit der der Kontroller noch funktioniert, ein einwandfreies Auslesen gewährleistet ist. Bei einer generellen Verzögerung der Taktfrequenz während eines Lesevorganges bedeutet dies bei niedrigen Taktfrequenzen eine unnötige Verzögerung. Deshalb ist in einer besonderen Ausgestaltungsform der Erfindung mit adaptierenden Wartetakten vorgesehen, die für die Ansteuerung der CPU vorgesehene Taktfrequenz oder die Prozessortaktfrequenz zu bewerten. In Abhängigkeit von dem ermittelten tatsächlichen Taktfrequenzwert kann dann die Anzahl der von der Wait State Schaltung erzwungenen Wartetakte stufenweise erhöht werden, so daß immer ein einwandfreies Auslesen sichergestellt ist, ohne die übliche Verarbeitungsgeschwindigkeit des Mikroprozessors in unnötiger Weise zu begrenzen.

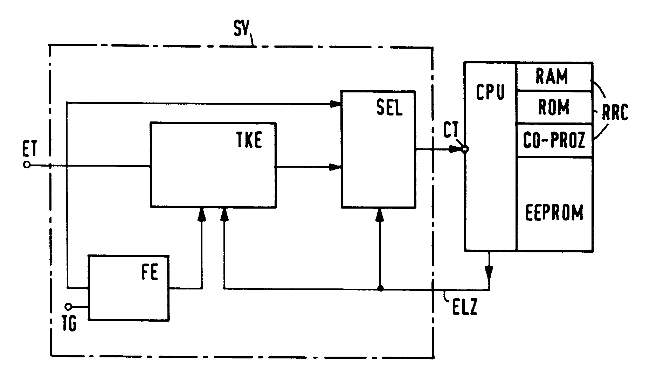

Nachfolgend wird die Erfindung anhand der Figur näher erläutert.

Die Figur zeigt in schematischer Darstellung eine Ausgestaltungsform eines erfindungsgemäßen Mikroprozessors mit einer zentralen Steuereinheit CPU, einem Speicher vom EEPROM-Typ EEPROM, weiterer Schaltungseinheiten RRC, wie z.B. einem RAM-Speicher, einem ROM-Speicher und einem Coprozessor sowie eine Schutzvorrichtung SV. Die Schutzvorrichtung SV ist zwischen einen mit einem externen Taktsignal beaufschlagbaren Mikroprozessortakteingang ET und den Takteingang CT der CPU geschaltet. Die Schutzvorrichtung SV wird von der CPU über eine Signalleitung ELZ mit einem Signal versorgt, das einen EEPROM-Lesezugriff anzeigt. In der dargestellten Ausgestaltungsform ist der Takteingang ET an eine Taktkonditionierungseinheit TKE geschaltet sowie an einen Eingang einer Verknüpfungsvorrichtung SEL. Außerdem ist der Taktsignaleingang ET mit einem Eingang einer Frequenzerkennungsvorrichtung FE zusammengeschaltet. Die Frequenzerkennungsvorrichtung FE hat einen weiteren Eingang TG, der mit einem Frequenzgrenzwert beaufschlagt ist. Ein Ausgang der Frequenzerkennungsvorrichtung FE ist mit einem Steuereingang der Taktkonditionierungseinheit verbunden und liefert an diese ein Signal, das von dem Zusammenhang zwischen dem Taktfrequenzgrenzwert TG und dem an dem Takteingang ET anliegenden Mikroprozessortakt abhängt. Die von der CPU kommende Steuerleitung ELZ ist an die Verknüpfungsvorrichtung SEL geschaltet und kann ggf. auch an die Taktkonditionierungseinheit TKE geschaltet sein. Ein Ausgang der Taktkonditionierungseinheit, der den konditionierten Takt führt, ist mit einem weiteren Takteingang der Verknüpfungsvorrichtung SEL verbunden. Die Taktkonditionierungseinheit, die die Aufgabe hat, den extern eingespeisten Takt während eines Lesezugriffes zu dem EEPROM herunterzuteilen, enthält vorzugsweise einen ladbaren Zähler, der die Frequenzteilung durchführt. Der auszugebende konditionierte Takt wird damit solange angehalten, bis die Eingabe einer von durch das Teilerverhältnis des Zählers definierten Anzahl externer Taktzyklen erfolgt ist. Der Zähl- bzw. Teilvorgang wird durch das Steuersignal auf der Leitung ELZ gestartet. Durch das Ausgangssignal der Vorrichtung zur Frequenzerkennung FE kann das Teilerverhältnis der Zählvorrichtung der Taktkonditionierungseinheit ggf. eingestellt werden.

Die Verknüpfungsvorrichtung SEL schaltet in Abhängigkeit von dem auf der Leitung ELZ anliegenden und von der zentralen Steuereinheit CPU bereitgestellten Signal entweder den an dem Takteingang ET anliegenden externen Takt zur CPU weiter oder den von der Taktkonditionierungseinheit TKE bereitgestellten konditionierten Takt.

Falls in einer erfindungsgemäßen Anordnung die normale Betriebsfrequenz des Mikroprozessors höher ist als die Grenzfrequenz, bei der ein sicheres Lesen des EEPROM-Speichers gewährleistet ist, ist es empfehlenswert, während jedes Lesevorganges, also immer, wenn die CPU auf der Leitung ELZ ein entsprechendes Signal abgibt, den an dem Eingang ET eingespeisten externen Takt mit einem vorgegebenen, durch die Grenzfrequenz des EEPROM's und die Betriebsfrequenz des Mikroprozessors festgelegten Teilerverhältnis zu konditionieren und ein entsprechend längeres Taktzyklussignal an die CPU zu schalten. Um auszuschließen, daß infolge von unzulässiger weiterer Erhöhung der Taktfrequenz am Takteingang ET unzulässige Lesevorgänge des EEPROM-Speichers durchgeführt werden, ist es darüber hinaus empfehlenswert, in Abhängigkeit von der tatsächlichen, am Eingang ET eingespeisten Taktfrequenz mit Hilfe der Vorrichtung zur Frequenzerkennung FE das Teilerverhältnis der Taktkonditionierungseinheit TKE zu erhöhen. Diese Erhöhung kann stufenweise in Abhängigkeit von dem tatsächlich ermittelten Taktfrequenzwert am Eingang ET erfolgen. Eine besondes günstige, weil einfach zu realisierende Ausgestaltungsform der Erfindung sieht jedoch vor, daß die Taktkonditionierungseinheit nur mit zwei unterschiedlichen Teilungsfaktoren bzw. Verzögerungsfaktoren arbeitet, nämlich dem zuvor beschriebenen, für den Normalbetrieb vorgesehenen Verzögerungswert und mit einem Verzögerungsfaktor bzw. Teilungsfaktor, der durch der Verhältnis des von der verwendeten CPU maximal verarbeitbaren Taktfrequenzgrenzwertes und des maximalen, einen sicheren Lesezugriff auf das EEPROM gewährleistenden Grenzfrequenz festgelegt wird. Bei einer solchen Anordnung ändert die Taktkonditionierungseinheit TKE die Länge der von ihr bereitgestellten konditionierten Taktzyklen in Abhängigkeit davon, ob die Frequenzerkennungsvorrichtung FE an dem Taktfrequenzeingang ET einen Takt erkennt, der bei dem niedrigen der beiden Teilungsfaktoren der Taktkonditionierungseinheit zu einem konditionierten Takt führen würde, dessen Frequenz die zulässige Grenzfrequenz für EEPROM-Lesezugriffe übersteigt. In diesem Fall braucht die Frequenzerkennungsvorrichtung FE die an dem Eingang ET eingespeiste Mikroprozessortaktfrequenz nicht mit der Grenzfrequenz für einen sicheren EEPROM-Lesezugriff zu vergleichen, sondern mit einer Grenzfrequenz, die sich aus der Grenzfrequenz für einen EEPROM-Lesezugriff und dem geringeren Teilungsverhältnis bzw. Verzögerungsfaktor der Taktkonditionierungseinheit ergibt.

Die Frequenzerkennungsvorrichtung FE zeigt mit Hilfe ihres Ausgangssignales an, ob der extern eingespeiste Takt eine bestimmte Grenzfrequenz überschritten hat. In einer Ausgestaltungsform der Erfindung wird der Zustand des Überschreitens der Grenzfrequenz in einem Flipflop gespeichert, dessen Setzeingang über ein Hochpaßglied angesteuert wird. Der Rücksetzeingang wird über einen Tiefpaß nach erfolgtem Absenken der Frequenz unter den Grenzwert aktiviert. Zur Vermeidung von permanenten Schaltvorgängen im Bereich der Grenzfrequenz ist bei einer solchen Ausgestaltungsform der Erfindung durch entsprechende Wahl der Hochpaß- und Tiefpaßparameter eine Hysterese einstellbar.

## Patentansprüche

1. Mikroprozessor mit einer zentralen Steuereinheit (CPU), mit einem Speicher vom EEPROM-Typ (EEPROM) und mit einer Schutzvorrichtung (SV), die sicherstellt, daß während eines Lesevorganges im EEPROM-Speicher (EEPROM) die Taktfrequenz der zentralen Steuereinheit (CPU) einen Grenzwert nicht übersteigt, bei dem ein Lesen des Speichers (EEPROM) sicher gewahrleistet ist,
wobei die Schutzvorrichtung (SV) mit einer Taktkonditionierungseinheit (TKE) gebildet ist, die einen Takteingang (ET) zum externen Eingeben eines Mikroprozessortaktes aufweist, und die während eines Lesevorganges des Speichers (EEPROM) den Mikroprozessortakt durch Frequenzteilung verringert, so daß während des Lesevorganges ein Taktsignal mit gegenüber sonstigen Vorgängen verlängertem Taktzyklus zum Steuern der zentralen Steuereinheit (CPU) zur Verfügung steht,
und mit einer Verknüpfungsvorrichtung (SEL), die zwei Taktsignaleingänge und einen Taktsignalausgang aufweist, gebildet ist, wobei ein Taktsignaleingang der Verknüpfungsvorrichtung (SEL) mit dem Taktsignaleingang (ET) des Mikroprozessors zusammengeschaltet ist, der andere Taktsignaleingang der Verknüpfungsvorrichtung (SEL) mit dem Taktsignalausgang der Taktkonditionierungseinheit (TKE) verbunden ist und der Taktsignalausgang der Verknüpfungsvorrichtung (SEL) das Taktsignal zum Ansteuern der zentralen Steuereinheit (CPU) bereitstellt und
wobei die Verknüpfungsvorrichtung (SEL) von der zentralen Steuereinheit (CPU) derart angesteuert ist, daß sie abwechselnd den an dem Taktsignaleingang (ET) anliegenden Mikroprozessortakt und den von der Taktkonditionierungseinheit (TKE) bereitgestellten Takt
zur zentralen Steuereinheit (CPU) überträgt, **dadurch gekennzeichnet**, daß die Schutzvorrichtung (SV) außerdem eine Vorrichtung zur Frequenzerkennung (FE) aufweist, die mit dem extern eingegebenen Mikroprozessortakt beaufschlagt ist und eine Verringerung der Taktfrequenz des zum Ansteuern der zentralen Steuereinheit (CPU) vorgesehenen Taktsignals in Abhängigkeit von der Taktfrequenz des erfaßten Mikroprozessortaktes bewirkt und daß die Verknüpfungseinrichtung (SEL) derart angesteuert ist, daß sie nur während eines EEPROM-Speicher-Lesezugriffs den von der Taktkonditionierugseinheit (TKE) bereitgestellten Takt zur zentralen Steuereinheit (CPU) überträgt.

2. Mikroprozessor nach Anspruch 1, **dadurch gekennzeichnet**, daß die Taktkonditionierungseinheit (TKE) einen Frequenzteiler umfaßt, der mit dem extern eingegebenen Mikroprozessortakt angesteuert wird.

3. Mikroprozessor nach Anspruch 1 oder 2, **dadurch gekennzeichnet**, daß die Verknüpfungsvorrichtung (SEL) ein logisches Gatter ist.

4. Mikroprozessor nach Anspruch 1 oder 2, **dadurch gekennzeichnet**, daß die Verknüpfungsvorrichtung (SEL) ein Multiplexer ist.

5. Mikroprozessor nach einem der Ansprüche 2, 3 oder 4, **dadurch gekennzeichnet**, daß der Frequenzteiler in Form eines Zählers ausgeführt ist.

6. Mikroprozessor nach Anspruch 5, **dadurch gekennzeichnet**, daß der Zähler programmierbar ist.

7. Mikroprozessor nach einem der Ansprüche 5 oder 6, **dadurch gekennzeichnet**, daß in Abhängigkeit von einem vorgegebenen Zählerstand des Zählers das an dem mindestens einen anderen Eingang der Verknüpfungsvorrichtung (SEL) anliegende Binärsignal seinen Wert verändert.

8. Mikroprozessor nach einem der Ansprüche 1 bis 7, **dadurch gekennzeichnet**, daß die Schutzvorrichtung (SV) wahrend eines Lesevorgangs im EEPROM-Speicher (EEPROM) die Taktfrequenz unabhängig von der tatsächlichen Taktfrequenz um einen fest vorgegebenen Faktor verringert und daß sie nur bei Erreichen eines Grenzwertes der Taktfrequenz, diese um einen größeren Faktor verringert.

9. Mikroprozessor nach Anspruch 8, **dadurch gekennzeichnet**, daß der größere Faktor in Abhängigkeit vom tatsächlichen Wert der Mikroprozessortaktfrequenz variabel ist.

## Claims

1. Microprocessor having a central control unit (CPU), having an EEPROM-type memory (EEPROM) and having a protective device (SV) which ensures that, during a read operation in the EEPROM memory (EEPROM), the clock frequency of the central control unit (CPU) does not exceed a limit value for which reading of the memory (EEPROM) is assured, in which the protective device (SV) is formed using a clock conditioning unit (TKE) which has a clock input (ET) for externally inputting a microprocessor clock signal and which, during a read operation in the memory (EEPROM), reduces the microprocessor clock frequency by frequency division, so that, during the read operation, a clock signal whose clock cycle is longer than that of other operations is available for controlling the central control unit (CPU), and is formed using a logic device (SEL) having two clock signal inputs and a clock signal output, one clock signal input of the logic device (SEL) being connected to the clock signal input (ET) of the microprocessor, the other clock signal input of the logic device (SEL) being connected to the clock signal output of the clock conditioning unit (TKE), and the clock signal output of the logic device (SEL) providing the clock signal for driving the central control unit (CPU), and in which the logic device (SEL) is driven by the central control unit (CPU) such that it alternately transmits the microprocessor clock signal applied to the clock signal input (ET) and the clock signal provided by the clock conditioning unit (TKE) to the central control unit (CPU), characterized in that the protective device (SV) also has a device for frequency recognition (FE) which has the externally input microprocessor clock signal applied to it and causes the clock frequency of the clock signal provided for driving the central control unit (CPU) to be reduced on the basis of the clock frequency of the microprocessor clock signal detected, and in that the logic device (SEL) is driven such that it transmits the clock signal provided by the clock conditioning unit (TKE) to the central control unit (CPU) only during an EEPROM memory read access operation.

2. Microprocessor according to Claim 1, characterized in that the clock conditioning unit (TKE) comprises a frequency divider which is driven by the externally input microprocessor clock signal.

3. Microprocessor according to Claim 1 or 2, characterized in that the logic device (SEL) is a logic gate.

4. Microprocessor according to Claim 1 or 2, characterized in that the logic device (SEL) is a multiplexer.

5. Microprocessor according to one of Claims 2, 3 and 4, characterized in that the frequency divider is in the form of a counter.

6. Microprocessor according to Claim 5, characterized in that the counter is programmable.

7. Microprocessor according to one of Claims 5 and 6, characterized in that the binary signal applied to the at least one other input of the logic device (SEL) changes its value on the basis of a predetermined counter reading of the counter.

8. Microprocessor according to one of Claims 1 to 7, characterized in that the protective device (SV) reduces the clock frequency during a read operation in the EEPROM memory (EEPROM) by a firmly predetermined factor irrespective of the actual clock frequency, and in that it reduces the clock frequency by a greater factor only if a limit value for the clock frequency is reached.

9. Microprocessor according to Claim 8, characterized in that the greater factor is variable on the basis of the actual value of the microprocessor clock frequency.

## Revendications

1. Microprocesseur comprenant une unité de commande centrale (CPU), une mémoire du type EEPROM (EEPROM) et un dispositif de protection (SV) qui garantit que, pendant une opération de lecture exécutée dans la mémoire EEPROM (EEPROM), la fréquence d'horloge de l'unité de commande centrale (CPU) n'excèdera pas une valeur limite à laquelle une lecture de la mémoire (EEPROM) est garantie avec sécurité, le dispositif de protection (SV) comprenant une unité de conditionnement de
l'horloge (TKE) qui présente une entrée d'horloge (ET), pour l'introduction extérieure d'une horloge de microprocesseur et qui, pendant une opération de lecture de la mémoire (EEPROM), réduit l'horloge du microprocesseur par une division de fréquence, de sorte que, pendant l'opération de lecture, un signal d'horloge possédant un cycle d'horloge allongé comparativement aux autres opérations, est à disposition pour la commande de l'unité de commande centrale (CPU),
et comprenant un dispositif de combinaison (SEL) qui présente deux entrées de signal d'horloge et une sortie de signal d'horloge, une entrée de signal d'horloge du dispositif de combinaison (SEL) étant connectée avec l'entrée de signal d'horloge (ET) du microprocesseur, l'autre entrée de signal d'horloge du dispositif de combinaison (SEL) étant connectée à la sortie de signal d'horloge de l'unité de conditionnement de l'horloge (TKE) et la sortie de signal d'horloge du dispositif de combinaison (SEL) fournissant le signal d'horloge pour la commande de l'unité de commande centrale (CPU), et
le dispositif de combinaison (SEL) étant commandé par l'unité de commande centrale (CPU) de manière à ce qu'il transmette alternativement à l'unité de commande centrale (CPU) l'horloge du microprocesseur appliqué à l'entrée de signal d'horloge (ET) et l'horloge fournie par l'unité de conditionnement de l'horloge (TKE), caractérisé en ce que le dispositif de protection (SV) présente en supplément un dispositif d'identification de la fréquence (FE) qui reçoit le l'horloge de microprocesseur introduite de l'extérieur et opère une réduction de la fréquence d'horloge du signal d'horloge prévu pour la commande de l'unité de commande centrale (CPU) en fonction de la fréquence de l'horloge de microprocesseur recueillie, et en ce que le dispositif de combinaison (SEL) est commandé de manière à ce qu'il ne transmette l'horloge fournie par l'unité de conditionnement d'horloge (TKE) à l'unité de commande centrale (CPU) que pendant un accès de lecture à la mémoire EEPROM.

2. Microprocesseur selon la revendication 1, caractérisé en ce que l'unité de conditionnement de l'horloge (TKE) comprend un diviseur de fréquence qui est commandé avec l'horloge de microprocesseur introduite de l'extérieur.

3. Microprocesseur selon la revendication 1 ou 2, caractérisé en ce que le dispositif de combinaison (SEL) est une porte logique.

4. Microprocesseur selon la revendication 1 ou 2, caractérisé en ce que le dispositif de combinaison (SEL) est un multiplexeur.

5. Microprocesseur selon une des revendications 2, 3 ou 4, caractérisé en ce que le diviseur de fréquence est réalisé sous la forme d'un compteur.

6. Microprocesseur selon la revendication 5, caractérisé en ce que le compteur est programmable.

7. Microprocesseur selon une des revendications 5 ou 6, caractérisé en ce que, en fonction d'un état prédéterminé du compteur, le signal binaire appliqué à l'- au moins une- autre entrée du dispositif de combinaison (SEL) change de valeur.

8. Microprocesseur selon une des revendications 1 à 7, caractérisé en ce que, pendant une opération de lecture dans la mémoire EEPROM (EEPROM), le dispositif de protection (SV) réduit la fréquence d'horloge indépendamment de la fréquence d'horloge réelle, d'un facteur prédéterminé à une valeur fixe, et en ce que ce n'est que lorsqu'on atteint une valeur limite de la fréquence d'horloge qu'il réduit cette dernière d'un facteur plus élevé.

9. Microprocesseur selon la revendication 8, caractérisé en ce que le facteur plus élevé peut être modifié en fonction de la valeur réelle de la fréquence d'horloge du microprocesseur.
